Europäisches Patentamt

(19) European Patent Office

Office européen des brevets

(11) Numéro de publication : **0 284 455 B1**

(12) # FASCICULE DE BREVET EUROPEEN

(45) Date de publication du fascicule du brevet :
02.10.91 Bulletin 91/40

(51) Int. Cl.⁵ : **B23K 11/06**

(21) Numéro de dépôt : **88400386.4**

(22) Date de dépôt : **19.02.88**

(54) **Machine de soudage électrique par résistance, pour la fabrication de viroles métalliques.**

(30) Priorité : 13.03.87 FR 8703478

(43) Date de publication de la demande :
28.09.88 Bulletin 88/39

(45) Mention de la délivrance du brevet :
02.10.91 Bulletin 91/40

(84) Etats contractants désignés :
BE DE ES GB IT NL

(56) Documents cités :
EP-A- 0 023 753
DE-A- 2 738 238
US-A- 2 612 580

(73) Titulaire : CMB PACKAGING S.A.
65, avenue Edouard Vaillant
F-92100 Boulogne Billancourt (FR)

(72) Inventeur : Rivière, Maurice
14 Allée des Myosotis
F-78390 Bois d'Arcy (FR)

(74) Mandataire : CABINET BONNET-THIRION
95 Boulevard Beaumarchais
F-75003 Paris (FR)

## Description

L'invention se rapporte à une machine de soudage par résistance, pour la fabrication de tubes ou viroles métalliques, rentrant notamment dans la constitution de corps de boîte pour emballages métalliques ; elle concerne plus particulièrement un perfectionnement permettant la formation de tels tubes de faible diamètre par soudage des bords longitudinaux rejoints de flans de tôle.

Pour réaliser des emballages métalliques, on utilise couramment des flans de tôles d'acier étamé électrolytiquement. Chaque flan est roulé sur lui-même pour former le corps d'un emballage métallique et ses deux bords longitudinaux opposés, rejoints, sont soudés par effet Joule, c'est-à-dire en faisant passer un courant de forte intensité dans les bords rejoints en contact, de façon à provoquer une soudure entre ceux-ci. On met ainsi à profit la résistance de contact plus élevée entre les zones métalliques en contact du flan pour provoquer un effet Joule localisé dans les parties à souder. Le circuit de soudage comporte un générateur électrique, susceptible de délivrer un courant de forte intensité et deux molettes de soudage, connectées aux deux bornes de ce générateur. Les bords rejoints à souder sont pressés entre les deux molettes de soudage. Par conséquent, l'une des molettes tournant sur un axe supporté par un bras en porte à faux s'inscrit dans le diamètre intérieur de la virole préformée.

On ne peut réduire l'encombrement de la molette en deçà de certaines limites.

Pratiquement, un tel agencement ne peut plus convenir pour des viroles d'un diamètre inférieur à 40 mm. Les problèmes qui se posent alors sont notamment : une trop faible section de passage, entraînant des densités de courant trop élevées dans les conducteurs et un refroidissement insuffisant.

Par ailleurs, le document EP-A- 0023753 décrit un agencement avec molette de soudage externe et électrode interne en forme de barre. Cependant, aucune machine décrite dans ce document ne peut être modifiée de façon simple pour la formation d'une virole de petit diamètre.

L'invention propose un nouvel agencement de soudage convenant notamment pour la fabrication de viroles de faible diamètre et notamment des viroles de diamètre inférieur à 40 mm.

L'invention concerne essentiellement une machine de soudage électrique par résistance pour la formation de viroles de faible diamètre, du type comportant un poste de roulage où des flans de tôle sont préformés en viroles et un poste de soudage ccmportant une molette de contact coopérant avec les bords rejoints d'un tel flan, comportant en outre des moyens de transfert du flan roulé, du poste de roulage vers le poste de soudage, couplés à des moyens d'actionnement leur communiquant un mouvement linéaire alternatif, lesdits moyens de transfert comportant au moins une barre longitudinale conductrice de courant formant électrode dont le trajet passe en regard de ladite molette de contact, caractérisée en ce que lesdits moyens de transfert comportent un noyau de maintien sur lequel ledit flan est appliqué audit poste de roulage, ledit noyau étant maintenu au voisinage de ladite molette de contact par un agencement de galets, en ce que ladite barre longitudinale conductrice de courant est fixée dans une rainure dudit noyau et électriquement isolée de ce dernier et en ce que cette barre est électriquement reliée à une borne d'un générateur électrique.

Avec la structure définie ci-dessus, on peut envisager de réaliser aussi bien un soudage avec recouvrement des zones marginales en contact du flan roulé qu'un soudage bord à bord, sans surépaisseur.

Dans le premier cas, le générateur électrique pourra être relié entre la molette de contact d'une part et une unique barre longitudinale précitée, d'autre part.

Dans le second cas, on pourra prévoir deux barres longitudinales disposées côte à côte, faiblement écartées mais électriquement isolées l'une de l'autre. Le générateur électrique sera alors connecté entre les deux barres, la molette de contact ne servant qu'à fermer le circuit électrique passant par les deux bords en contact par leurs champs.

L'invention sera mieux comprise et d'autres avantages de celle-ci apparaîtront plus clairement à la lumière de la description qui va suivre d'un mode de réalisation d'une machine conforme à son principe et de quelques variantes, donnée uniquement à titre d'exemple et faite en référence aux dessins annexés dans lequels :

— la figure 1 est une vue schématique partiellement en coupe, de l'ensemble de la machine ;

— la figure 2 est une coupe II-II de la figure 1 ;

— la figure 3 est une coupe III-III de la figure 1 ;

— la figure 4 est une coupe IV-IV de la figure 1 ;

— la figure 5 est une coupe V-V de la figure 1 ;

— la figure 6 est une vue de détail de l'encadré 6 de la figure 5 ;

— la figure 7 est une vue analogue à la figure 6 illustrant une variante et ;

— la figure 8 est une vue de détail semblable à la figure 3 et illustrant une autre variante possible.

En se référant aux dessins, la machine de soudage représentée comporte un magasin dépileur 12 dans lequel sont accumulés des flans de tôle 13, un poste de roulage 14 disposé à la partie inférieure du magasin 12 et un poste de soudage 15 comportant notamment une molette de contact 16 montée tournante autour d'un arbre 17 légèrement mobile verticalement et sollicité par un ressort 18 vers le trajet des viroles à souder.

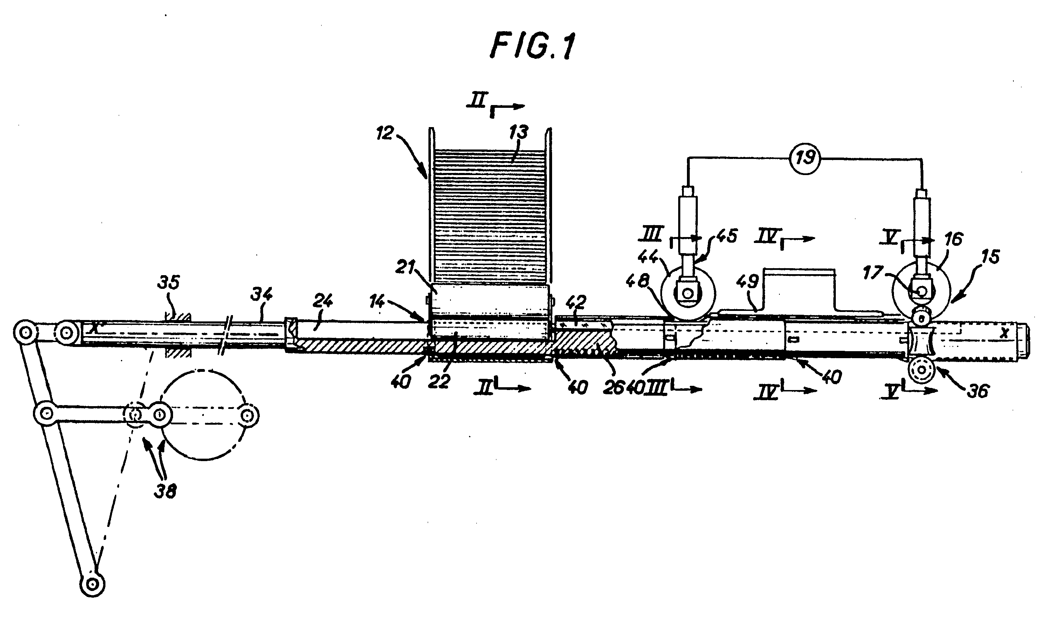

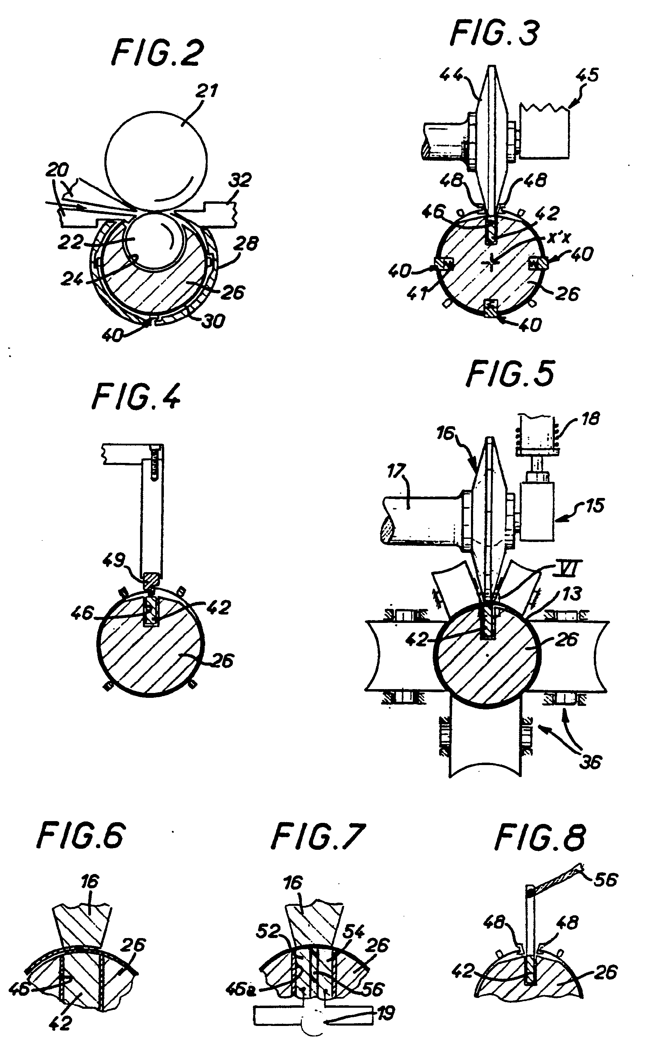

Dans l'exemple des figures 1 à 5, la molette de contact 16 est électriquement reliée à une borne d'un générateur électrique 19, capable de délivrer un courant important sous basse tension. Elle forme donc l'une des électrodes du système de soudage par résistance. Le poste de roulage 14 est bien visible sur la figure 2. Chaque flan provenant du magasin 12 passe entre des guides 20 pour être introduit entre deux rouleaux 21, 22 de diamètres différents. Le rouleau 22 de plus petit diamètre est logé dans une cavité 24 cylindrique, (ouverte longitudinalement en regard du rouleau 21), d'un noyau de maintien 26 d'un flan roulé, lui-même engagé dans un réceptacle tubulaire cylindrique 28, fixe, ouvert longitudinalement comme la cavité 24, en regard du rouleau 21. Le réceptacle 28 s'étend sous le magasin 12 sur une longueur du même ordre de grandeur que la longueur des flans à rouler. Les deux rouleaux 21, 22 sont montés tournant entre des flasques fixes. Ils sont disposés de telle sorte qu'un flan engagé entre eux se trouve entraîné et engagé dans l'espace annulaire 30 défini entre la surface interne du réceptacle 28 et la surface externe du noyau 26. A cet effet, l'un des rouleaux 21, 22 est entraîné en rotation par des moyens moteurs non représentés et un déviateur biseauté 32 est disposé en face des guides 20, de l'autre côté des rouleaux 21, 22, pour forcer le bord du flan à s'engager dans l'espace 30. Le noyau de maintien 26 est mobile longitudinalement suivant son propre axe x'x.

Dans l'exemple représenté, ledit noyau est prolongé par un arbre coulissant 34. Cet arbre est maintenu dans un palier 35 tandis que le noyau 26 est maintenu au voisinage de la molette de contact 16 par un agencement de galets à profils concaves 36, connu dans la technique sous le nom de "couronne de calibrage", cette dernière étant ajustée au diamètre extérieur de la virole au moment du soudage. Des moyens d'actionnement schématisés ici par un système bielle-manivelle 38, raccordés à l'extrémité de l'arbre 34, impriment un mouvement linéaire alternatif à l'ensemble de la tige 34 et du noyau 26. Celui-ci porte plusieurs groupes de taquets biseautés 40 (figure 3) montés dans des logements abritant des ressorts 41 sollicitant lesdits taquets radialement vers l'extérieur. Les taquets de chaque groupe se situent approximativement dans un plan perpendiculaire à l'axe x'x (voir figure 3). Les groupes de taquets sont espacés le long de cet axe, d'une distance constante. L'amplitude de déplacement définie par le système bielle-manivelle 38 est quelque peu supérieure à la longueur d'un flan 13. Il en est de même de ladite distance constante qui sépare deux groupes consécutifs de taquets. Le nombre de groupes de taquets dépend de la longueur qui sépare le poste de roulage du poste de soudage. La pente des taquets est telle que lorsque le noyau se déplace vers la gauche en considérant la figure 1, les taquets 40 s'effacent dans leurs logements respectifs et s'engagent dans une virole en formation jusqu'à ressortir à l'extrémité opposée de ladite virole où ils se déploient radialement, sous l'action des ressorts 41. Puis, lorsque le noyau se déplace vers la droite en considérant la figure 1, les taquets entrent en contact avec le bord approximativement circulaire de la virole en formation et entraînent cette dernière dans la direction du poste de soudage. Des rainures longitudinales pratiquées sur la face interne du réceptacle 28 évitent que le déploiement radial des taquets 40 soit limité par le réceptacle 28, ce qui se traduirait par un mauvais entraînement des viroles à la sortie du poste de roulage.

L'ensemble du noyau 26 et des groupes de taquets 40 constitue des moyens de transfert de flan roulé depuis le poste de roulage 14 vers le poste de soudage 15. Le rouleau 22 a approximativement la longueur d'un flan 13 et la cavité 24 a une longueur quelque peu supérieure au double de la longueur dudit rouleau qu'elle abrite, pour que celui-ci ne puisse entraver le mouvement alternatif du noyau 26.

Selon une caractéristique importante de l'invention, les moyens de transfert précités comportent une barre longitudinale 42 conductrice de courant, de préférence en cuivre électrolytique, formant électrode et, en conséquence, électriquement reliée à une borne du générateur électrique 19.

Dans l'exemple décrit aux figures 1 à 5, ledit générateur électrique est donc connecté entre la molette de contact 16 et une molette d'amenée de courant 44 montée sur un support 45 d'emplacement fixe, analogue à celui qui porte la molette 16. Lorsque les moyens de transfert (et par conséquent la barre 42) se déplacent alternativement, la molette 44 est adaptée à rouler librement sur une piste de contact de la barre 42. De façon générale, la barre 42 s'étend à l'intérieur du volume engendré par le trajet d'un flan roulé entre ledit poste de roulage 14 et ledit poste de soudage 15. Dans l'exemple plus particulièrement décrit, la barre est logée dans une rainure 46 du noyau. La barre 42 et le noyau 26 sont mobiles conjointement et électriquement isolés l'un de l'autre. De façon avantageuse, le noyau 26 est réalisé dans un bloc d'aluminium auquel on a fait subir une anodisation "dure". On obtient ainsi une plus grande dureté de la surface du noyau (donc une usure moindre de celui-ci) et une bonne isolation électrique entre la barre et le noyau, grâce à l'anodisation. Au voisinage de la piste de contact entre la molette 44 et la barre 42, se trouvent des guides écarteurs 48 (figure 3) dans lesquels coulissent les bords longitudinaux à souder de la virole en formation. Ces guides évitent tout contact électrique entre cette dernière et la molette 44 en application contre la barre 42. S'agissant d'une soudure avec recouvrement des zones marginales du flan roulé, les guides écarteurs 48 se prolongent par des guides de recouvrement 49 comportant deux gorges opposées et partiellement superposées, comme cela est visible sur la figure 4. Lesdites zones marginales sont donc progressivement mises en recouvrement pendant leur déplacement entre la molette 44 et le poste de soudage et se retrouvent dans la situation des figures 5 et 6, en regard de la molette de contact 16 où s'effectue le soudage par résistance, mis en oeuvre de façon classique. Dans cet exemple, le courant traverse la double épaisseur de tôle, entre la molette 16 et la barre 42, perpendiculairement à la plage de recouvrement desdites zones marginales.

La figure 7 illustre une variante applicable dans le cas où on désire réaliser un soudage des bords de la virole en contact par leurs champs, c'est-à-dire sans recouvrement. Dans ce cas, l'équipement est modifié de telle sorte que le noyau 26 renferme deux barres longitudinales parallèles 52, 54 rapprochées latéralement mais électriquement isolées l'une de l'autre. Les deux barres sont par exemple logées dans une rainure 46a et séparées par une bande de matériau isolant 56. Les deux barres sont respectivement électriquement connectées au deux bornes du générateur 19. Dans ce cas, la molette de contact 16 n'est plus directement reliée à un quelconque générateur électrique. Son rôle est seulement d'appliquer les bords rejoints contre les barres 52 et 54 et de permettre le passage du courant de l'une à l'autre à travers, successivement, deux épaisseurs de tôle dans lesquelles la température s'élève par effet Joule, jusqu'à la soudure des champs en contact.

L'invention admet encore de nombreuses variantes. Ainsi, la figure 8 montre qu'il est possible de supprimer la molette 44 et de la remplacer par un élément conducteur souple 56, comme par exemple une tresse métallique, reliant un prolongement radial de la barre à l'une des bornes du générateur électrique. Bien entendu, cette variante est aussi transposable au système de la figure 7, en utilisant deux tresses. Enfin, il est encore possible d'assurer la liaison électrique de la ou chaque barre par d'autres moyens, comme par exemple une succession d'éléments conducteurs rigides, articulés entre eux pour ne pas entraver le mouvement du noyau 26.

**Revendications**

1. Machine de soudage électrique par résistance pour la formation de viroles de faible diamètre, du type comportant un poste de roulage (12) où des flans de tôle sont préformés en viroles et un poste de soudage (15) comportant une molette de contact (16) coopérant avec les bords rejoints d'un tel flan, comportant en outre des moyens de transfert du flan roulé (26, 40), du poste de roulage vers le poste de soudage, couplés à des moyens d'actionnement (38) leur communiquant un mouvement linéaire alternatif, lesdits moyens de transfert comportant au moins une barre longitudinale conductrice de courant (42-52, 54) formant électrode dont le trajet passe en regard de ladite molette de contact, caractérisée en ce que lesdits moyens de transfert comportent un noyau de maintien (26) sur lequel ledit flan est appliqué audit poste de roulage, ledit noyau étant maintenu au voisinage de ladite molette de contact (16) par un agencement de galets (36), en ce que ladite barre longitudinale conductrice de courant (42-52, 54) est fixée dans une rainure dudit noyau et électriquement isolée de ce dernier et en ce que cette barre est électriquement reliée à une borne d'un générateur électrique.

2. Machine de soudage selon la revendication 1, pour le soudage avec recouvrement des zones marginales en contact d'un flan roulé précité, caractérisée en ce qu'elle comporte une unique barre longitudinale (42) et en ce que ladite molette de contact (16) est reliée à l'autre borne dudit générateur électrique (19).

3. Machine de soudage selon la revendication 1, pour le soudage de bords en contact par leurs champs, caractérisée en ce qu'elle comporte deux barres longitudinales parallèles (52, 54), rapprochées et électriquement isolées l'une de l'autre, respectivement connectées aux deux bornes dudit générateur électrique (19).

4. Machine de soudage selon l'une des revendications précédentes, caractérisée en ce que la ou chaque barre longitudinale précitée est en contact avec une molette d'amenée de courant (44), cette molette, montée sur un support d'emplacement fixe et reliée à une borne dudit générateur électrique, étant adaptée à rouler librement sur une piste de contact de ladite barre (42), lorsque celle-ci se déplace longitudinalement.

5. Machine de soudage selon l'une des revendications 1 à 3, caractérisée en ce que la ou chaque barre longitudinale est reliée à une borne d'un générateur électrique par au moins un élément conducteur souple (56) tel qu'une tresse, connue en soi.

6. Machine de soudage selon l'une des revendications 1 à 3, caractérisée en ce que la ou chaque barre longitudinale est reliée à une borne d'un générateur électrique par au moins une succession d'éléments conducteurs rigides articulés entre eux.

**Patentansprüche**

1. Maschine zum elektrischen Widerstandsschweißen für die Herstellung von Zargen geringen Durchmessers, mit einer Rollstation (12), in der Blechzuschnitte zu Zargen verformt werden, mit einer Schweißstation (15), die ein Kontaktrad (16) umfaßt, das mit den aneinanderliegenden Rändern eines solchen Zuschnitts zusammenwirkt, und mit Mitteln (26, 40) zu Übergeben des gerollten Zuschnitts von der Rollstation an die Schweißstation, welche Mittel mit Betätigungsmitteln (38) gekuppelt sind, die ersteren eine hin- und hergehende, lineare Bewegung erteilen, und welche Übergabemittel mindestens eine längslaufende, stromleitende Stange (42-52, 54) umfassen, die eine Elektrode bildet und deren Bahn gegenüber dem Kontaktrad verläuft, dadurch gekennzeichnet, daß die Übergabemittel ein Haltekern (26) umfassen, gegen den der Zuschnitt in der Rollstation angelegt wird, welcher Kern in der Nähe des Kontaktrades (16) durch eine Räderanordnung (36) gehalten wird, daß die längslaufende, stromleitende Stange (42-52, 54) in einer Nut in dem Kern, elektrisch isoliert von diesem, befestigt ist, und daß diese Stange mit einem Anschluß eines Stromerzeugers elektrisch verbunden ist.

2. Maschine nach Anspruch 1, für das Schweißen mit Überdeckung der sich berührenden Randbereiche eines vorerwähnten, gerollten Zuschnitts, dadurch gekennzeichnet, daß sie einen einzigen, längslaufenden Stab (42) umfaßt, und daß das Kontaktrad (16) mit dem anderen Anschluß des Stromerzeugers (19) verbunden ist.

3. Maschine nach Anspruch 1, für das Schweißen der sich berührenden Ränder auf Stoß, dadurch gekennzeichnet, daß sie zwei parallele, längslaufende Stäbe (52, 54) umfaßt, die nahe beieinander liegen, elektrisch voneinander isoliert sind und jeweils mit einem der zwei Anschlüsse des Stromerzeugers (19) verbunden sind.

4. Maschine nach einem der vorhergehenden Ansprüche, dadurch gekennzeichnet, daß der oder jeder vorerwähnte, längslaufende Stab sich in Kontakt mit einem Stromzuführungsrad (44) befindet, das, montiert auf einen ortsfesten Träger und verbunden mit einem Anschluß des Stromerzeugers, so ausgelegt ist, daß es auf einer Kontaktbahn des Stabes (42) abrollt, wenn dieser sich längsverschiebt.

5. Maschine nach einem der Ansprüche 1 bis 3, dadurch gekennzeichnet, daß der oder jeder längslaufende Stab mit einem Anschluß eines Stromerzeugers über mindestens ein biegsames, elektrisch leitendes Element (56) wie eine an sich bekannte Litze, verbunden ist.

6. Maschine nach einem der Ansprüche 1 bis 3, dadurch gekennzeichnet, daß der oder jeder längslaufende Stab mit einem Anschluß eines Stromerzeugers über mindestens eine Aufeinanderfolge von starren, elektrisch leitenden Elementen verbunden ist, die untereinander gelenkig verbunden sind.

## Claims

1. An electrical resistance welding machine for forming hollow cylinders of small diameter, of the kind comprising a rolling station (12), at which sheet metal blanks are preformed into hollow cylinders, and a welding station (15) which includes a contact wheel (16) cooperating with the mutually engaging edges of a said blank, and further comprising transfer means (26, 40) for transferring the rolled blank from the rolling station to the welding station, coupled with actuating means (38) which imparts an alternating linear motion to the transfer means, the said transfer means including at least one electrically conductive longitudinal bar (42-52, 54) constituting an electrode, the path of motion of which passes in front of the said contact wheel, characterised in that the maid transfer means include a support core member (26), on to which the said blank is applied at the said rolling station, the maid core member being held adjacent to the said contact wheel (16) by roll means (36), in that the said electrically conductive longitudinal bar (42-52, 54) is secured in a groove of the said core member and is electrically insulated from the latter, and in that the said bar is electrically connected to one terminal of an electrical generator.

2. A welding machine according to Claim 1, for welding marginal zones of a said rolled blank in overlapping contact with each other, characterised in that it includes a single longitudinal bar (42), and in that the said contact wheel (16) is connected to the other terminal of the said electrical generator (19).

3. A welding machine according to Claim 1, for welding edges in butt contact, characterised in that it has two parallel longitudinal bars (52, 54), close to, but electrically insulated from, each other and respectively connected to the two terminals of the said electrical generator (19).

4. A welding machine according to one of the preceding Claims, characterised in that the or each said longitudinal bar is in contact with a current supply wheel (44), with this wheel being mounted on a fixed locating support and connected to one terminal of the said electrical generator, and being adapted to roll freely on a contact region of the said bar (42) when the latter is displaced longitudinally.

5. A welding machine according to one of Claims 1 to 3, characterised in that the or each longitudinal bar is connected to one terminal of an electrical generator through at least one flexible conductor element (56), for example a braid of a known kind.

6. A welding machine according to one of Claims 1 to 3, characterised in that the or each longitudinal bar is connected to one terminal of an electrical generator through at least a succession of rigid conductor elements articulated together.

# FIG.1

# FIG.2

# FIG.3

# FIG.4

# FIG.5

# FIG.6

# FIG.7

# FIG.8